# EUROPÄISCHE PATENTSCHRIFT

(11) **EP 0 363 500 B1**
(45) Veröffentlichungstag und Bekanntmachung des Hinweises auf die Patenterteilung: **16.06.1993**
(21) Anmeldenummer: 88116127.7
(22) Anmeldetag: 29.09.1988
(51) Int. Cl.: H04L 25/03

(54) **Schaltungsanordnung zum Entzerren von in analoger Form empfangener Digitalsignale**
Circuit arrangement for the correction of digital signals received in an analogous form
Circuit d'égalisation de signaux numériques reçus sous forme analogique

(43) Veröffentlichungstag der Anmeldung: 18.04.1990
(73) Patentinhaber: SIEMENS AKTIENGESELLSCHAFT, 80333 München (DE)
(72) Erfinder: Schenk, Heinrich, Dr.-Ing., D-8000 München 71 (DE)

(56) Entgegenhaltungen:
- US-A- 4 504 958
- IEEE INTERNATIONAL CONFERENCE ON COMMUNICATIONS 1985, 23.-26. Juni 1985, Chicago, Illinois, Band 2, Seiten 971-976, IEEE, New York, US; W. GRAFINGER et al.: "Design and realization of a high speed multilevel QAM digital radio modem with time-domain equalization"

## Beschreibung

Die Erfindung betrifft eine Schaltungsanordnung gemäß Oberbegriff des Patentanspruches 1. Derartige Schaltungsanordnungen sind bereits bekannt (z. B: NTG-Fachberichte 88, "Wege zum integrierten Kommunikationsnetz", Seiten 50 bis 57), um Digitalsignale, die durch ein analoges Übertragungsverfahren übertragen werden und dabei sowohl durch Vorschwinger nachfolgender Digitalsignale als auch durch Nachschwinger zuvor empfangener Digitalsignale verursachten Verzerrungen unterworfen sind, zu entzerren. Dabei treten insbesondere bei digitalen Teilnehmeranschlüssen in ISDN (Integrated Services Digital Network) starke lineare Verzerrungen auf, die durch entsprechende Entzerrungsmaßnahmen in Digitalsignal-Empfangseinrichtungen beseitigt werden müssen. Die durch Vorschwinger verursachten Verzerrungen sind im allgemeinen gering. Zur Entzerrung ist beispielsweise ein Transversalfilter mit zwei bis vier Fiterkoeffizienten ausreichend. Verzerrungen, die durch Nachschwinger verursacht sind, sind demgegenüber sehr groß. Sie lassen sich beispielsweise mit einem entscheidungsrückgekoppelten Entzerrer kompensieren. Die Anzahl der Entzerrerkoeffizienten liegt hier im Bereich von 20 bis 40. Bei höherwertigen Digitalsignalen, wie z. B. bei nach einem 2BlQ-Leitungscode codierten Digitalsignalen, können jedoch in derartigen Entzerrern bei starken Verzerrungen Konvergenz- und Stabilitätsprobleme auftreten.

Es ist nun Aufgabe der vorliegenden Erfindung, einen Weg zu zeigen, wie bei einer Schaltungsanordnung gemäß Oberbegriff des Patentanspruches 1 das Konvergenz- und Stabilitätsverhalten verbessert werden kann.

Gelöst wird die vorstehend aufgezeigte Aufgabe bei einer Schaltungsanordnung gemäß Oberbegriff des Patentanspruches 1 durch die im kennzeichnenden Teil dieses Patentanspruches angegebenen Merkmale. Die Erfindung bringt den Vorteil mit sich, daß mit einem geringen zusätzlichen schaltungstechnischen Aufwand in dem Vorschwinger-Entzerrer auch bereits die Nachschwinger-Verzerrungen reduziert werden, so daß durch diese Reduzierung das Konvergenz und Stabilitätsverhalten des Nachschwinger-Entzerrers verbessert ist.

Gemäß den Patentansprüchen 2 und 3 sind zwei hinsichtlich des schaltungstechnischen Aufwandes besonders günstige Ausführungsbeispiele für einen Vorschwinger-Entzerrer angegeben.

Für die Auslegung des Vorschwinger-Entzerrers hat es sich als zweckmäßig erwiesen, daß die Nebenkoeffizienten adaptiv einstellbar sind und der festgelegte Faktor A mit 1/2 oder als ganzzahliger Faktor festgelegt ist.

Im folgenden wird nun die vorliegende Erfindung anhand von Zeichnungen beispielsweise näher erläutert.
FIG 1 zeigt in einem Blockschaltbild eine digitale Teilnehmeranschluß-Einrichtung, bei der die Erfindung angewandt ist,
FIG 2 zeigt ein erstes Ausführungsbeispiel für einen Vorschwinger-Entzerrer und
FIG 3 zeigt ein zweites Ausführungsbeispiel für einen Vorschwinger-Entzerrer.

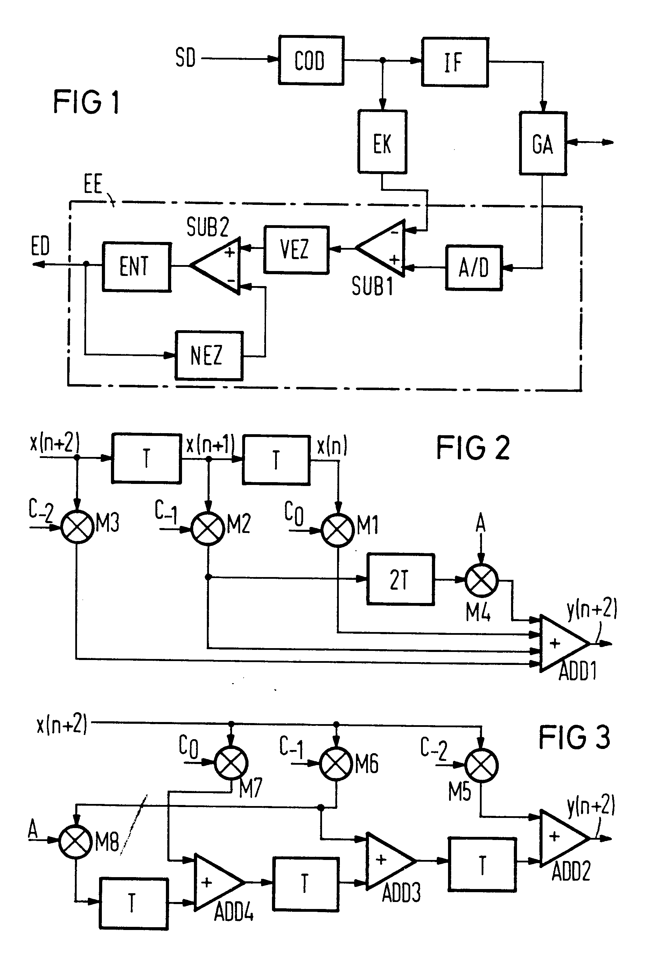

Die in FIG 1 dargestellte digitale Teilnehmeranschluß-Einrichtung möge beispielsweise für eine Duplex-Übertragung von Digitalsignalen über eine Zweidraht-Leitung im Gleichlage-Verfahren ausgelegt sein. Von einer solchen Teilnehmeranschluß-Einrichtung werden beispielsweise als Nachrichtensignale über die Zweidraht-Leitung zu übertragende Binärsignale SD zunächst mit Hilfe eines Codierers COD in mehrstufige Signale, beispielsweise in nach dem 2BlQ-Leitungscode codierte Digitalsignale umgesetzt und nach einer Impulsformung in einem Impulsformer IF als analoge Signale über eine Gabelanordnung GA abgegeben.

Von der betreffenden Teilnehmeranschluß-Einrichtung über die Zweidraht-Leitung aufzunehmende analoge Signale durchlaufen zunächst die bereits erwähnte Gabelanordnung GA und gelangen anschließend zu der in FIG 1 dargestellten Digitalsignal-Empfangseinrichtung EE. Den Eingang dieser Empfangseinrichtung bildet ein Analog/Digital-Wandler A/D, der den ihm zugeführten Analogsignalen Abtastproben beispielsweise in einem einer Bitlänge der übertragenen Digitalsignale entsprechenden Abstand entnimmt und diese jeweils in ein Digitalsignal vorgegebener Bitanzahl umsetzt. Die dafür erforderlichen Abtasttaktimpulse werden von einem nicht dargestellten Taktgenerator bereitgestellt.

Die von dem Analog/Digital-Wandler bereitgestellten Digitalsignale werden anschließend nacheinander einem Subtrahierer SUB1 zugeführt, der gleichzeitig mit Kompensationssignalen von einem Echokompensator EK her beaufschlagt ist. Durch diese Kompensationssignale werden in den Digitalsignalen enthaltene Echosignalanteile kompensiert, die bei der zuvor beschriebenen Abgabe von Digitalsignalen in analoger Form über die Zweidraht-Leitung durch Reflektionen auf dieser Leitung bzw. durch eine nicht vollständige Entkopplung der Übertragungswege der Gabelanordnung den empfangenen analogen Signalen überlagert sind.

Die kompensierten Digitalsignale werden anschließend für eine weitere Verarbeitung gegebenenfalls über einen nicht dargestellten Regelverstärker an eine Entzerrer-Anordnung weitergeleitet, die die durch die elektrischen Eigenschaften der Zweidraht-Leitung bedingten Verzerrungen der Digitalsignale weitgehend beseitigt. Die Entzerrer-Anordnung weist dabei beispielsweise einen Vorschwinger-Entzerrer VEZ auf, dessen Ausgangssignale einem Subtrahierer SUB2 zugeführt sind. Ein zweiter Eingang dieses Subtrahierers ist mit dem Ausgang eines Nachschwinger-Entzerrers NEZ verbunden. Eingangsseitig ist dieser Entzerrer an dem Ausgang eines Entscheiders ENT angeschlossen, der dem Subtrahierer SUB2 nachgeschaltet ist. Die am Ausgang dieses Entscheiders auftretenden entzerrten Digitalsignale ED werden anschließend weiteren, in FIG 1 nicht dargestellten Einrichtungen für eine weitere Auswertung zugeführt.

Im folgenden wird lediglich auf den Vorschwinger-Entzerrer VEZ näher eingegangen, da die Wirkungsweise der anderen Schaltungsteile der in FIG 1 dargestellten Teilnehmeranschluß-Einrichtung bereits hinlänglich bekannt ist.

In FIG 1 ist ein erstes Ausführungsbeispiel für den in FIG 1 dargestellten Vorschwinger-Entzerrer VEZ angegeben. Dieser Entzerrer ist als Transversalfilter ausgebildet, bei welchem für die Entzerrung drei aufeinanderfolgende Digitalsignale x(n), x(n+1) und x(n+2) berücksichtigt sind, die zu den Abtastzeitpunkten n, n+1, n+2 auftreten. Diese Digitalsignale sind zwei in Reihe geschalteten Verzögerungsgliedern T zugeführt, die jeweils eine dem zeitlichen Abstand zweier aufeinanderfolgender Digitalsignale entsprechende Verzögerungszeit bewirken. Damit tritt das Digitalsignal x(n+2) am Eingang des Transversalfilters gleichzeitig mit den an den Ausgängen der beiden Verzögerungsglieder T anliegenden Digitalsignalen x(n+1) und x(n) auf. Diese Digitalsignale sind drei gesonderten Multiplizierern M1, M2 und M3 zugeführt. Der Multiplizierer M1 multipliziert dabei das Digitalsignal x(n) mit einem Hauptkoeffizienten C_{O}, der beispielsweise mit C_{O} = 1 festgelegt ist. Mit Hilfe der Multiplizierer M2 und M3 erfolgt dagegen eine Multiplikation des Digitalsignals x(n+1) bzw. x(n+2) mit einem Nebenkoeffizienten C₋₁ bzw. C₋₂. Die Ausgänge dieser Multiplizierer sind mit Eingängen eines Addierers ADD1 verbunden, der an seinem Ausgang ein hinsichtlich der durch die Digitalsignale x(n+1) und x(n+2) hervorgerufenen Vorschwinger-Verzerrungen befreites Digitalsignal y(n+2) abgibt.

Der Ausgang des Multiplizierers M2 ist zusätzlich über ein Verzögerungsglied 2T, welches eine gegenüber den genannten Verzögerungsgliedern T doppelte Verzögerungszeit bewirkt, mit einem Multiplizierer M4 verbunden. Dieser Multiplizierer ist außerdem mit einem festgelegten Faktor A beaufschlagt und steht ausgangsseitig mit einem weiteren Eingang des bereits genannten Addierers ADD1 in Verbindung. Durch das dem Addierer auf diese Weise zugeführte Signal werden zusätzlich die in dem Digitalsignal x(n) enthaltenen, durch das zum Zeitpunkt n-1 auftretende Digitalsignal x(n-1) hervorgerufenen Nachschwinger-Verzerrungen reduziert.

In FIG 3 ist ein weiteres Ausführungsbeispiel für den in FIG 1 dargestellten Vorschwinger-Entzerrer VEZ angegeben. Bei diesem Ausführungsbeispiel werden die aufeinanderfolgenden Digitalsignale gleichzeitig drei gesonderte Multiplizierern M5, M6 und M7 zugeführt. Der Multiplizierer M7 ist außerdem mit dem Hauptkoeffizienten C_{O} beaufschlagt. Dem Multiplizierer M6 bzw. M5 ist dagegen der Nebenkoeffizient C₋₁ bzw. C₋₂ zugeführt. Jeder der Multiplizierer ist ausgangsseitig an einen Eingang eines insgesamt zwei Eingänge aufweisenden Addierers angeschlossen. Der mit dem Multiplizierer M7 verbundene Addierer ist in FIG 3 mit ADD4 bezeichnet. Demgegenüber trägt der mit dem Multiplizierer M6 bzw. M5 bezeichnete Addierer die Bezeichnung ADD3 bzw. ADD2. Der Ausgang des Multiplizierers M6 ist zusätzlich mit einem weiteren, mit einem festgelegten Faktor A beaufschlagten Multiplizierer M8 verbunden. Dieser Multiplizierer ist ausgangsseitig über ein Verzögerungsglied T an den zweiten Eingang des Addierers ADD4 angeschlossen. Der zweite Eingang des dem Multiplizierer M6 zugeordneten Addierers ADD3 ist dagegen über ein Verzögerungsglied T mit dem Ausgang des Addierers ADD4 verbunden. In entsprechender Weise steht mit dem zweiten Eingang des Addierers ADD2 der Ausgang des Addierers ADD3 über ein Verzögerungsglied T in Verbindung. Die gerade genannten Verzögerungsglieder bewirken im übrigen jeweils eine Verzögerungszeit, die dem zeitlichen Abstand zweier aufeinanderfolgender Digitalsignale entspricht.

Durch das in FIG 3 dargestellte Transversalfilter wird ebenfalls einerseits ein zum Zeitpunkt n auftretendes Digitalsignal x(n) von den in ihm enthaltenen, durch die Digitalsignale x(n+1) und x(n+2) hervorgerufenen Vorschwinger-Verzerrungen befreit und andererseits der Anteil von durch das Digitalsignal x(n-1) verursachten Nachschwinger-Verzerrungen reduziert.

Bei den beiden zuvor beschriebenen Ausführungsbeispielen kann der Hauptkoeffizient C_{O} einen festen Wert aufweisen, z. B. C_{O} = 1. Die Nebenkoeffizienten C₋₁ und C₋₂ können dagegen adaptiv einstellbar sein. Da für diese adaptive Einstellung beliebige bekannte Verfahren anwendbar sind, wird hier auf eine nähere Erläuterung verzichtet. Unabhängig von der Wahl des Verfahrens zur adaptiven Einstellung ist es zweckmäßig, den zuvor erwähnten Faktor A mit 1/2 oder als ganzzahligen Faktor, beispielsweise 1, 2 oder 3, festzulegen.

Abschließend sei noch darauf hingewiesen, daß zwar anhand der FIG 2 und 3 zwei Ausführungsbeispiele für ein Transversalfilter beschrieben worden sind, mit welchem eine Entzerrung von Digitalsignalen mit Hilfe eines Hauptkoeffizienten und zwei Nebenkoeffizienten durchgeführt ist. Die Anzahl der Nebenkoeffizienten kann jedoch auch erhöht sein, wenn für eine ausreichende Entzerrung von Digitalsignalen eine größere Anzahl aufeinanderfolgender Digitalsignale zu berücksichtigen ist. Darüber hinaus kann das Transversalfilter gemäß der vorliegenden Erfindung auch einen gegenüber den FIG 2 und 3 abweichenden Aufbau aufweisen. So ist es beispielsweise möglich, daß dieses Transversalfilter auch unter Verwendung eines Signalprozessors realisiert ist.

## Patentansprüche

1. Schaltungsanordnung für eine Digitalsignal-Empfangseinrichtung zum Entzerren von in analoger Form über einen Analog/Digital-Wandler (A/D) empfangener, durch Vor- und Nachschwinger nachfolgender bzw. zuvor übertragener Digitalsignale verzerrter Digitalsignale, mit einem Nachschwinger-Entzerrer (NEZ) und einem mit diesem verbundenen, als Transversalfilter ausgebildeten Vorschwinger-Entzerrer (VEZ), welcher zu vorgegebenen Abtastpunkten k, mit k = 1,...,p, aufeinanderfolgende Digitalsignale zugeführt erhält und welcher ein zu einem Abtastzeitpunkt n zugeführtes Digitalsignal (x(n)) mit einem Hauptkoeffizienten (C_{O}) sowie eine festgelegte Anzahl dem betreffenden Digitalsignal unmittelbar nachfolgender Digitalsignale (x(n+1), x(n+2)) mit jeweils einem festgelegten Nebenkoeffizienten (C₋₁,C₋₂) multipliziert und die daraus resultierenden Produktsignale mit Hilfe eines Addierers (ADD1) zu einem ersten Summensignal aufsummiert, **dadurch gekennzeichnet**,
daß der dem Hauptkoeffizienten (C_{O}) unmittelbar vorangehende Nebenkoeffizient (C₋₁), gewichtet mit einem festgelegten Faktor (A), mit einem zum Abtastzeitpunkt n-1 auftretenden Digitalsignal multipliziert wird
und daß aus dem daraus resultierenden Produktsignal und dem ersten Summensignal mit Hilfe des Addierers (ADD1) ein Gesamtsummensignal gebildet wird.

2. Schaltungsanordnung nach Anspruch 1, **dadurch gekennzeichnet**,
daß die aufeinanderfolgenden Digitalsignale in bekannter Weise einer der Anzahl der für eine Entzerrung zu berücksichtigenden Digitalsignale entsprechenden Anzahl von in Reihe geschalteten ersten Verzögerungsgliedern (T) des Transversalfilters (VEZ) zugeführt sind, welche jeweils eine dem zeitlichen Abstand zweier aufeinanderfolgender Abtastzeitpunkte entsprechende Verzögerungszeit bewirken,
daß die Ausgänge der Verzögerungsglieder jeweils an einen mit dem Hauptkoeffizienten bzw. mit einem der Nebenkoeffizienten beaufschlagten Multiplizierer (M1, M2, M3) angeschlossen und die Ausgänge dieser Multiplizierer dem Addierer (ADD1) zugeführt sind
und daß derjenige Multiplizierer, der mit dem dem Hauptkoeffizienten unmittelbar vorangehenden Nebenkoeffizienten beaufschlagt ist, zusätzlich über ein gegenüber den ersten Verzögerungsgliedern (T) eine doppelte Verzögerungszeit bewirkendes Verzögerungsglied (2T) mit einem weiteren Multiplizierer (M4) verbunden ist, dem eingangsseitig außerdem der festgelegte Faktor (A) zugeführt ist und der ausgangsseitig mit einem Eingang des Addierers (ADD1) verbunden ist.

3. Schaltungsanordnung nach Anspruch 1, **dadurch gekennzeichnet**,
daß die aufeinanderfolgenden Digitalsignale gleichzeitig einer Mehrzahl von mit dem Hauptkoeffizienten (C_{O}) bzw. mit einem der zu berücksichtigenden Nebenkoeffizienten (C₋₁, C₋₂) beaufschlagten Multiplizierern (M5, M6, M7) zugeführt sind,
daß jeder der Multiplizierer an einem Eingang eines dem Hauptkoeffizienten bzw. einem der Nebenkoeffizienten zugeordneten, insgesamt zwei Eingänge aufweisenden Addierers (ADD2, ADD3, ADD4) angeschlossen ist,
daß der mit dem dem Hauptkoeffizienten unmittelbar vorangehenden Nebenkoeffizienten (C₋₁) beaufschlagte Multiplizierer (M7) zusätzlich mit einem weiteren, mit dem festgelegten Faktor beaufschlagten Multiplizierer (M8) verbunden ist,
daß der weitere Multiplizierer über ein Verzögerungsglied (T) an dem zweiten Eingang des dem Hauptkoeffizienten zugeorodneten Addierers (ADD4) angeschlossen ist,
daß die zweiten Eingänge der den Nebenkoeffizienten zugeordneten Addierer (ADD2, ADD3) jeweils über ein Verzögerungsglied (T) mit dem Ausgang des dem jeweils unmittelbar nachfolgenden Hauptkoeffizienten bzw. Nebenkoeffizienten zugeordneten Addierers verbunden sind
und daß die Verzögerungsglieder (T) jeweils eine dem zeitlichen Abstand zweier aufeinanderfolgender Abtastzeitpunkte entsprechende Verzögerungszeit bewirken.

4. Schaltungsanordnung nach einem der Ansprüche 1 bis 3, **dadurch gekennzeichnet**,
daß die Nebenkoeffizienten (C₋₁, C₋₂) adaptiv einstellbar sind und der festgelegte Faktor mit 1/2 oder als ganzzahliger Faktor festgelegt ist.

## Claims

1. Circuit arrangement for a digital-signal receiving device for correcting digital signals received in analog form via an analog/digital convertor (A/D) and distorted by preshoots and ringing of subsequent or previously transmitted digital signals, with a ringing corrector (NEZ) and a preshoot corrector (VEZ) connected to the former and constructed as transversal filter which is supplied with successive digital signals at predetermined sampling points k, where k = 1, ..., p, and which multiplies a digital signal (x(n)) supplied at a sampling time n by a main coefficient (C_{O}) and multiplies a fixed number of digital signals (x(n+1), x(n+2)) immediately following the relevant digital signal by in each case a fixed secondary coefficient (C₋₁, C₋₂), and adds together the resultant product signals with the aid of an adder (ADD1) to form a first sum signal, characterised in that the secondary coefficient (C₋₁), immediately preceding the main coefficient (C_{O}), weighted by a fixed factor (A), is multiplied by a digital signal occurring at sampling time n-1, and that from the resultant product signal and the first sum signal, a total sum signal is formed with the aid of the adder (ADD1).

2. Circuit arrangement according to Claim 1, characterised in that the successive digital signals are supplied in known manner to a number, corresponding to the number of digital signals to be taken into consideration for a correction, of series-connected first delay sections (T) of the transversal filter (VEZ), which sections in each case produce a delay time corresponding to the time interval between two successive sampling times, that the outputs of the delay sections are in each case connected to a multiplier (M1, M2, M3) to which the main coefficient or one of the secondary coefficients is applied, and the outputs of these multipliers are supplied to the adder (ADD1), and that the multiplier to which the secondary coefficient immediately preceding the main coefficient is applied is additionally connected, via a delay section (2T) producing twice the delay time compared with the first delay sections (T), to a further multiplier (M4) the input of which is also supplied with the fixed factor (A) and the output of which is connected to the input of the adder (ADD1).

3. Circuit arrangement according to Claim 1, characterised in that the successive digital signals are simultaneously supplied to a plurality of multipliers (M5, M6, M7), to which the main coefficient (C_{O}) or one of the secondary coefficients (C₋₁, C₋₂) to be taken into consideration are applied, that each of the multipliers is connected at one input of an adder (ADD2, ADD3, ADD4) having a total of two inputs and allocated to the main coefficient or one of the secondary coefficients, that the multiplier (M6) to which the secondary coefficient (C₋₁) immediately preceding the main coefficient is applied is additionally connected to a further multiplier (M8) to which the fixed factor is applied, that the further multiplier is connected via a delay section (T) to the second input of the adder (ADD4) allocated to the main coefficient, that the second inputs of the adders (ADD2, ADD3) allocated to the secondary coefficients are in each case connected via a delay section (T) to the output of the adder allocated to the in each case immediately following main coefficient or secondary coefficient, and that the delay sections (T) in each case produce a delay time corresponding to the time interval between two successive sampling times.

4. Circuit arrangement according to one of Claims 1 to 3, characterised in that the secondary coefficients (C₋₁, C₋₂) are adaptively adjustable and the fixed factor is fixed with 1/2 or as an integral factor.

## Revendications

1. Montage pour un dispositif de réception de signaux numériques pour réaliser l'égalisation de signaux numériques, qui sont reçus sous forme analogique par l'intermédiaire d'un convertisseur analogique/numérique (A/D) et qui sont distordus par des préoscillations et par des post-oscillations de signaux numériques ultérieurs ou transmis auparavant, comportant un dispositif (NEZ) de correction de post-oscillations et, relié à ce dernier, un dispositif (VEZ) de correction de préoscillations sous la forme d'un filtre transversal, qui reçoit, à des instants d'échantillonnage prédéterminés k, avec k = 1, ..., p, des signaux numériques successifs, qui multiplie un signal numérique (x(n)) envoyé à un instant d'échantillonnage n, par un coefficient principal (C₀), ainsi qu'un nombre déterminé de signaux numériques (x(n+1),x(n+2)), qui suivent immédiatement le signal numérique considéré, par des coefficients secondaires respectifs déterminés (C₋₁,C₋₂), et qui additionne les signaux de produits obtenus, à l'aide d'un additionneur (ADD1), pour former un premier signal somme,
caractérisé par le fait
que le coefficient secondaire (C₋₁), qui précède immédiatement le coefficient principal (C₀), est multiplié, en étant pondéré par un facteur (A) déterminé, par un signal numérique qui apparait à l'instant d'échantillonnage (n-1), et
qu'à partir du signal de produit obtenu, et du premier signal somme, l'additionneur (ADD1) forme un signal somme global.

2. Montage suivant la revendication 1, caractérisé par le fait
que les signaux numériques successifs sont envoyés de manière connue, à un nombre de premiers circuits de retard (T) du filtre transversal (VEZ) montés en série, qui correspond au nombre de signaux numériques à considérer pour une égalisation, lesdits circuits de retard produisant respectivement un retard qui correspond à l'intervalle de temps entre deux instants d'échantillonnage successifs,
que les sorties des circuits de retard sont reliées respectivement à un multiplicateur (M1,M2,M3) chargé par le coefficient principal ou par l'un des coefficients secondaires, et que les sorties de ces multiplicateurs sont reliées à l'additionneur (ADD1), et
que le multiplicateur, chargé par le coefficient secondaire qui précède directement le coefficient principal, est, en outre, relié, par l'intermédiaire d'un circuit de retard (2T) qui produit un retard double de celui produit par le premier circuit de retard (T), à un autre multiplicateur (M4), à l'entrée duquel est, en outre, envoyé le facteur (A) déterminé et dont la sortie est reliée à une entrée de l'additionneur (ADD1).

3. Montage suivant la revendication 1, caractérisé par le fait
que les signaux numériques successifs sont envoyés simultanément à plusieurs multiplicateurs (M5, M6, M7), qui sont chargés par le coefficient principal (C₀) ou par l'un des coefficients secondaires (C₋₁, C₋₂) à prendre en compte,
que chacun des multiplicateurs est relié à une entrée d'un additionneur (ADD2,ADD3,ADD4) associé au coefficient principal ou à l'un des coefficients secondaires et comportant globalement deux entrées,
que le multiplicateur (M6), chargé par les coefficients secondaires (C₋₁) qui précèdent immédiatement le coefficient principal, est, en outre, relié à un autre multiplicateur (M8), chargé par le facteur déterminé,
que l'autre multiplicateur est relié, par l'intermédiaire d'un circuit de retard (T), à la seconde entrée de l'additionneur (ADD4) associé au coefficient principal,
que les secondes entrées des additionneurs (ADD2,ADD3) associés aux coefficients secondaires sont reliées, par l'intermédiaire d'un circuit de retard (T), respectivement à la sortie de l'additionneur associé au coefficient principal ou au coefficient secondaire immédiatement suivant,
que les circuits de retard (T) produisent un retard correspondant à l'intervalle de temps entre deux impulsions d'échantillonnage successives.

4. Montage suivant l'une des revendications 1 à 3, caractérisé par le fait que les coefficients secondaires (C₋₁, C₋₂) sont réglables de façon adaptative et que le facteur déterminé est fixé à 1/2 ou est un nombre entier.
